# DEMANDE DE BREVET EUROPEEN

(11) **EP 4 786 536 A1**
(43) Date de publication de la demande: **05.08.2026**
(21) Numéro de dépôt: 26155770.6
(22) Date de dépôt: 02.02.2026
(51) Int. Cl.: C08J 11/08

(54) **PROCÉDÉ DE PURIFICATION DE MATÉRIAUX BASE PVC COMPRENANT DES MÉTAUX LOURDS ET/OU DES PLASTIFIANTS**

(30) Priorité: 03.02.2025 FR 2501054
(71) Demandeur: Kem One, 69008 Lyon (FR)
(72) Inventeur: LAURENT, Mickaël, 69007 LYON (FR); BOSTE, Mickaël Claude Gérard, 69780 MIONS (FR); GUICHERET, Boris, 38300 CHEZENEUVE (FR)
(74) Mandataire: Lavoix

(57) **Abrégé**

La présente invention concerne un procédé de purification d'un matériau base PVC à purifier comprenant du PVC et au moins un plastifiant et/ou un métal lourd, comprenant les étapes suivantes :
a) Une étape de dissolution du matériau base PVC à purifier dans un solvant de dissolution, pour obtenir un mélange comprenant le matériau base PVC dissout dans le solvant de dissolution, et
b) Une étape de précipitation comprenant l'ajout au mélange obtenu à l'étape a) d'au moins un acide organique, pour obtenir une suspension comprenant un précipité comprenant un matériau base PVC épuré.

## Description

La présente invention concerne un procédé pour la purification d'un matériau base polychlorure de vinyle (PVC) comprenant au moins un métal lourd et/ou au moins un plastifiant, en particulier un plastifiant cancérogène, mutagène ou toxique pour la reproduction (CMR). L'invention vise l'extraction de métaux lourds et/ou de plastifiants, en particulier de plastifiants CMR, de formulations de PVC et la récupération de PVC ou de compound (mélange de PVC et d'additifs) de PVC substantiellement exempt de ces métaux lourds et/ou plastifiants. Le procédé a notamment pour objectif de traiter des articles en PVC ou contenant du PVC afin de les recycler tout en respectant les réglementations en vigueur concernant les taux de métaux lourds et/ou de plastifiants, notamment de plastifiants CMR.

Avant 2010, de nombreux articles en PVC fabriqués en Europe contenaient des systèmes stabilisants tel que des sels de métaux lourds et notamment des sels de plomb et / ou de cadmium dans le but de protéger le polymère contre sa dégradation thermique lors de la transformation. Ces articles sont en particulier des articles en PVC rigides, comme par exemple des profilés de fenêtres. Par ailleurs, d'autres articles en PVC, plus souples, comme les revêtements de sols, contiennent de nombreux plastifiants, dont certains sont maintenant considérés comme cancérogène, mutagène ou toxique pour la reproduction (CMR). **Il** est également possible dans certains articles en PVC ou dans des mélanges d'articles en PVC à l'instar des gaines de câbles PVC, de retrouver des stabilisants à base de métaux lourds et des plastifiants CMR.

La réglementation européenne limite désormais l'utilisation du plomb et du cadmium, ainsi que celles de phtalates CMR, dans l'ensemble des applications du PVC. A titre d'exemple, le plomb contenu dans les formulations en PVC aujourd'hui commercialisées ne peut dépasser la teneur de 0,1% en poids et de 0,01% pour le cadmium et la teneur en chaque plastifiant CMR ne doit également pas dépasser 0,1% en poids. Etant donné qu'aucun procédé permettant d'extraire efficacement et pour un coût raisonnable les métaux lourds et/ou les plastifiants n'existe à ce jour, ces réglementations limitent l'utilisation d'articles usagés basés sur du PVC, ce qui constitue un barrage à leur recyclabilité.

Un objectif de l'invention est donc de proposer un procédé de purification de matériaux base PVC à purifier qui soit versatile, c'est-à-dire permettant d'éliminer soit les métaux lourds, soit les plastifiants et notamment les plastifiants CMR, soit les deux.

Un autre objectif de l'invention est de proposer un procédé efficace, rapide et peu couteux.

D'autres objectifs de l'invention apparaîtront à la lecture de la description qui suit.

La présente invention concerne donc un procédé de purification d'un matériau base PVC à purifier comprenant du PVC et au moins un plastifiant et/ou un métal lourd, le procédé comprenant les étapes suivantes :
a) Une étape de dissolution du matériau base PVC à purifier dans un solvant de dissolution, pour obtenir un mélange comprenant le matériau base PVC dissout dans le solvant de dissolution, et
b) Une étape de précipitation comprenant l'ajout au mélange obtenu à l'étape a) d'au moins un acide organique, pour obtenir une suspension comprenant un précipité comprenant un matériau base PVC épuré.

Les inventeurs ont découvert que l'utilisation d'un acide organique pendant l'étape de précipitation permet d'obtenir un procédé versatile capable d'éliminer soit les plastifiants, soit les métaux lourds, soit les deux. En effet, l'acide organique peut à la fois participer à la précipitation sélective permettant d'éliminer les plastifiants (qui restent en solution), tout en jouant le rôle de piégeur d'ions de métaux lourds (en particulier du plomb) en formant des sels solubles. Ceci ne serait en particulier pas possible avec des acides inorganiques (comme l'acide sulfurique, l'acide chlorhydrique ou l'acide phosphorique) car ces acides ne forment pas de sels de métaux lourds qui soient suffisamment solubles dans le solvant de dissolution et / ou dans le mélange solvant de dissolution et mélange précipitant.

Par ailleurs, le fait de séparer le PVC par précipitation permet d'obtenir un PVC purifié sous forme de poudre qui est directement réutilisable. Au contraire, les procédés dans lesquels le PVC purifié est récupéré par évaporation d'un solvant dans lequel il est en solution fournissent un PVC en blocs ou sous forme de film, qui est incompatible avec une réutilisation ultérieure.

Le matériau base PVC à purifier peut-être de toute nature, qu'il soit rigide, plastifié, composite, ou combiné à d'autres matériaux. **Il** peut s'agir par exemple de profilés de fenêtres, de bardages, de clôtures et tout article en PVC rigide et souple utilisés dans le bâtiment, y compris les canalisations et raccords, les gaines de câbles, les revêtements de sols, des tissus enduits, des revêtements muraux, etc. Le matériau base PVC à purifier est en particulier un matériau provenant d'articles PVC en fin de vie ou des chutes de production pré-consommation (« pre-consumer »).

Le matériau base PVC à purifier comprend donc du PVC, et au moins un plastifiant et/ou un métal lourd, mais il peut comprendre en outre une quantité substantielle d'autres composés, comme des charges minérales, des fibres, des antioxydants, des stabilisateurs UV, des agents antistatiques, des agents ignifugeants, des modificateurs d'impact, des stabilisateurs de chaleur, des colorants, des biocides, et tout autre composant de la formulation PVC.

Typiquement, le matériau base PVC à purifier comprend de 5 à 95% en poids de PVC.

Si le matériau base PVC à purifier comprend au moins un métal lourd, il comprend au moins 10 ppm de métaux lourd, de préférence de plomb, de préférence de 10 à 50 000 ppm La teneur en métaux lourds peut être déterminée par spectrométrie à plasma à couplage inductif (ICP selon l'acronyme anglais) suivant la méthode décrite dans « Pharmacopée européenne 5.0 (édition 2005), 2.4.8 Métaux Lourds, Procédé F ».

Si le matériau base PVC à purifier comprend des plastifiants, en particulier des plastifiants CMR, il comprend au moins 20 000 ppm de plastifiants, de préférence de 20 000 à 900 000 ppm de plastifiants, et en particulier au moins 10 000 ppm de plastifiants CMR, de préférence de 10 000 à 600 000 ppm de plastifiants CMR. La teneur en plastifiants peut être déterminée selon la méthode décrite dans la norme EN 15777 (norme qui concerne la détection des phtalates dans des articles plastiques et des produits en PVC souples, et qui est recommandée par les directives européennes pour les analyses réglementaires).

Les métaux visés par l'invention sont notamment ceux que l'on regroupe usuellement sous l'appellation métaux lourds, et comprennent l'arsenic (As), le cadmium (Cd), le chrome (Cr), le cuivre (Cu), le manganèse (Mn), le mercure (Hg), le nickel (Ni), le plomb (Pb), le sélénium (Se), le zinc (Zn), et le baryum (Ba). Les métaux lourds, en particulier le plomb, peuvent être de différentes nature, et sont généralement sous forme de sels ou d'oxydes de métal, notamment des sels organiques tels que les stéarates neutres [Pb(St)₂], les stéarates dibasiques [2PbO.(St)₂Pb], les phosphites dibasiques [2PbO.PbPO₃.1/2H₂O], les sulfates tribasiques [3PbO.PbSO₄.H₂O], des oxydes tels que PbO et Pb(OH)₂, ou des carboxylates de cadmium ou de baryum.

Le métal lourd est de préférence du plomb.

Les plastifiants sont des molécules ou des oligomères qui rendent le PVC souple et flexible, notamment à basse température. Les plastifiants usuels permettant d'assouplir le PVC sont de préférence choisis parmi les phtalates (esters phtalates), les esters adipates, les trimélitates, les huiles époxydées, les esters citrates, les esters hexahydrophalates et les esters sébaçates. Les plastifiants sont de préférence choisis parmi les esters phtalates, en particulier parmi le butyl benzyl phtalate (BBP), le di-(2-ethylhexyl) phtalate (DEHP), le diisodecyl phtalate (DIDP), le di-n-butyl phtalate (DBP), le diisononyl phtalate (DINP), le di-n-pentylphtalate (DnPP), le mono-n-butylphtalate (MnBP), le diisobutyl phtalate (DIBP), le di-n-hexyl phtalate (DnHP), le di-propyl-heptylphtalate (DPHP), auxquels ajouter éventuellement le di-2-propyl-heptylphtalate (DPHP), le diisoundecyl phtalate (DIUP), le dicyclohexyl phtalate (DCHP), le ditridecyl phtalate (DTDP), le di-N-octylphtalate (DNOP)et le diisooctyle phtalate (DIOP). Les plastifiants particulièrement visés par le procédé de l'invention sont les plastifiants CMR, notamment le le butyl benzyl phtalate (BBP), le di-(2-ethylhexyl) phtalate (DEHP), le diisobutyl phtalate (DIBP) et le di-n-butyl phtalate (DBP).

### Etape a)

L'étape a) du procédé de l'invention comprend la dissolution du matériau base PVC à purifier dans un solvant de dissolution, pour obtenir un mélange comprenant le matériau base PVC dissout dans le solvant de dissolution.

De préférence, le matériau base PVC est sous la forme de granulats présentant une D50 entre 1 et 10 centimètres, ou entre 1 et 10 millimètres.

De préférence, le solvant de dissolution comprend, voire comprend essentiellement, voire consiste en, un solvant comprenant de 3 à 20 atomes de carbone, de préférence de 3 à 8 atomes de carbone, et au moins un atome d'oxygène, de préférence de 1 à 5 atomes d'oxygène ; de préférence comprend, voire comprend essentiellement, voire consiste en, un solvant choisi parmi les solvants cycliques ou aliphatiques, de préférence cycliques, comprenant au moins une fonction éther, ester, cétone ou cétal ; préférentiellement comprend, voire comprend essentiellement, voire consiste en, un solvant choisi parmi le tétrahydrofurane, le méthyl-tétrahydrofurane (MeTHF), les méthyltétrahydropyranes, la méthyléthylcétone, la méthylisobutylcétone, le 1,4-dioxane, le 1,3-dioxolane, la cyclopentanone, la cyclohexanone, le monoglyme, le diglyme, le N-butyl acétate, le diméthyl-phtalate, le méthyl propionate, les esters lévulinates en C1-C4 et leurs dérivés cétal comme les esters en C1-C4 de lévulinate de propanediol cétal, et les acétates d'alkyle en C1-C8 linéaires ou ramifiés ; avantageusement parmi le MeTHF, le 1,3-dioxolane, la méthyléthylcétone, le 4-méthyltétrahydropyrane.

Dans toute cette description, « X comprend essentiellement Y » signifie que Y est présent en une quantité d'au moins 85% en masse par rapport à la masse de X, de préférence au moins 95% en mase, de préférence au moins 98% en masse, de préférence de 85% à 99,99% en masse, de préférence de 95% à 99,9% en masse.

De préférence, la dissolution est effectuée à une température comprise entre 0 et 150 °C, de préférence entre 25 et 110°C.

De préférence, la quantité massique de solvant de dissolution utilisé à l'étape a) correspond de 1 à 12 fois la masse du matériau base PVC à purifier, de préférence de 1 à 8 fois, préférentiellement de 2 à 6 fois.

De préférence, la dissolution est effectuée en agitant le milieu comprenant le solvant de dissolution et matériau base PVC à purifier, de préférence pendant une durée allant de 10 minutes à 240 minutes, de préférence de 30 minutes à 120 minutes.

De préférence, le mélange comprenant le matériau base PVC dissout dans le solvant de dissolution est refroidit à la fin de l'étape a) à une température de 0 à 140 °C, de préférence de 10 à 70°C inférieure par rapport à la température de dissolution.

### Etape b)

L'étape b) du procédé de l'invention comprend l'ajout au mélange obtenu à l'étape a) d'au moins un acide organique, pour obtenir une suspension comprenant un précipité comprenant, voire étant constitué d'un matériau base PVC épuré.

De préférence, l'acide organique comprend au moins une fonction COOH et de 2 à 24 atomes de carbone (incluant le(les) C de la(des) fonction(s) COOH), de préférence de 2 à 18 atomes de carbone, préférentiellement de 2 à 10 atomes de carbone, avantageusement de 2 à 4 atomes de carbone ; de préférence est choisi parmi les composés de formule R1-COOH, avec R1 étant choisi parmi un méthyle, un éthyle et un radical hydrocarboné linéaire ou ramifié, et saturé ou insaturé, en C3-C23, de préférence en C3-C17, préférentiellement en C3-C9 ou parmi les composés de formule HOOC-R2-COOH avec R2 choisi parmi un méthyle, un éthyle et un radical hydrocarboné linéaire ou ramifié, et saturé ou insaturé, en C2-C22, de préférence en C2-C16, préférentiellement en C2-C8, ; plus préférentiellement l'acide organique est choisi parmi l'acide acétique, l'acide propionique, l'acide lévulinique, et l'acide formique.

De préférence, la quantité d'acide organique utilisé à l'étape b) correspond de 20% à 1000% de la masse du matériau base PVC à purifier, de préférence de 50% à 700 %, préférentiellement de 80% à 500 %.

De préférence, le milieu obtenu après l'ajout de l'acide organique est agité, de préférence pendant toute la durée de l'étape b).

De préférence, l'étape b) est mise en œuvre à une température comprise entre 0 et 140 °C, de préférence entre 20 et 80 °C.

L'acide organique de l'étape b) peut être pur, ou dilué dans un diluant, le diluant étant de préférence un solvant de dissolution (tel que défini ci-dessus, et de préférence le solvant de dissolution de l'étape a)), un non-solvant, ou leurs mélanges. On entend par non-solvant un non-solvant du PVC. Un non-solvant du PVC est typiquement un solvant dans lequel le PVC est soluble à moins de 1g/litre de non-solvant.

Lorsque l'acide organique est dilué, il est dilué à un taux de dilution allant de 10% à 99,9% massique, de préférence de 40% à 96%. Un taux de dilution massique de X% signifie que le mélange acide organique/diluant comprend X% d'acide organique et 100-X% de diluant.

Les non-solvants du PVC sont généralement les alcanes, les alcools, l'eau, et l'un quelconque de leurs mélanges. Par exemple, il peut s'agir de mélangesalcool/alcane ou alcool/eau.

Les alcanes sont aliphatiques (linéaires ou ramifiés) ou cycliques, et peuvent par exemple être en C5-C20, de préférence C5-C12. Ils peuvent être choisi parmi le pentane, l'hexane, l'heptane, l'octane, le nonane, le décane, l'undécane, le dodécane, le tridécane, le tétradécane, le pentadécane, l'hexadécane, l'heptadécane, l'octadécane, le nonadécane, l'icosane, le triacontane et le tétracontane.

Les alcools peuvent être aliphatiques (linéaires ou ramifiés) ou cycliques, monovalents ou polyvalents (par exemple di- ou trivalents). Des exemples d'alcools monovalents sont le méthanol, l'éthanol, le propanol, le butanol, le pentanol, l'hexanol, l'heptanol, l'octanol, le décanol, le dodécanol, leurs iso- et néo-alcools ; des exemples d'alcools bivalents sont l'éthan-1,2-diol, le propan-1,2-diol, le propan-1,3-diol, le butan-1,2-diol, le butan-1,3-diol, le butan-1,4-diol, le butan-2,3-diol, le pentan-1,5-diol, l'hexan-1,6-diol, l'octan-1,8-diol, le nonan-1,9-diol et le decan-1,10-diol ; des exemples d'alcools trivalents sont le triméthylol propane (TMP) ou le glycérol ; des exemples d'alcools monovalents cycliques sont le cyclohexanol et le cyclopentanol.

De préférence, le non-solvant du PVC comprend, voire comprend essentiellement, voire consiste en, un solvant choisi parmi les alcools, de préférence en C1-C12, les alcanes, de préférence en C5-C12, l'eau, et l'un quelconque de leurs mélanges ; préférentiellement comprend, voire comprend essentiellement, voire consiste en, un solvant choisi parmi l'isopropanol, l'heptane, l'eau et l'un quelconque de leurs mélanges ; avantageusement comprend, voire comprend essentiellement, voire consiste en, de l'eau.

L'étape b) peut également comprendre l'ajout d'un premier non-solvant du PVC (en plus de celui éventuellement utilisé pour diluer l'acide organique) et éventuellement l'ajout d'un co-solvant du PVC.

De préférence, la quantité de non-solvant utilisé à l'étape b), de préférence la quantité d'eau utilisée à l'étape b), correspond de 10 à 1000 % de la masse du matériau base PVC à purifier, de préférence de 35% à 600 %, de préférence de 50% à 600 %, préférentiellement de 50% à 300 %, plus préférentiellement de 80% à 300 %.

Selon un mode de réalisation, si le matériau base PVC à purifier comprend au moins un métal lourd, l'étape b) comprend en outre l'ajout d'un non-solvant du PVC tel que défini ci-dessus, de préférence le non-solvant consistant en de l'eau. De préférence, selon ce mode de réalisation, la quantité de non-solvant utilisé à l'étape b), de préférence la quantité d'eau utilisée à l'étape b), correspond de 10 à 1000 % de la masse du matériau base PVC à purifier, de préférence de 35% à 600 %, de préférence de 50% à 600 %, préférentiellement de 50% à 300 %, plus préférentiellement de 80% à 300 %.

Un co-solvant du PVC est de préférence un deuxième non-solvant du PVC différent du premier non-solvant du PVC ou un solvant de dissolution identique ou différent du solvant de dissolution de l'étape a). Le co-solvant peut être identique ou différent du solvant de dissolution de l'étape a) ou du non-solvant de l'étape b) ou du diluant de l'acide organique, de préférence identique au solvant de dissolution de l'étape a) ou différent du premier non-solvant utilisé lors de l'étape b).

Le co-solvant permet avantageusement d'obtenir une phase liquide miscible à partir de deux phases liquides non-miscible, l'une comprenant le solvant de dissolution de l'étape a) et l'autre comprenant le non-solvant de l'étape b).

Le co-solvant ajouté pendant l'étape b) peut être identique ou différent de celui éventuellement utilisé pour diluer l'acide organique, de préférence différent.

De manière générale, pendant l'étape b), l'acide organique, le non-solvant (si présent) et le co-solvant (si présent) peuvent être ajoutés les uns après les autres, selon n'importe quel ordre, ou peuvent être pré-mélangés en tout ou partie deux à deux, ou tous ensemble, selon n'importe quelle combinaison possible avant d'être introduits dans le milieu réactionnel pendant l'étape b).

Selon un mode de réalisation MR1, l'étape b) comprend une sous-étape b¹) d'ajout de l'acide organique au matériau base PVC dissout obtenu à l'étape a), suivie d'une sous-étape b¹') d'ajout d'un non-solvant du PVC.

De préférence, la quantité d'acide organique utilisé à la sous-étape b¹) correspond de 10 à 400 % de la masse du matériau base PVC à purifier, de préférence de 40 à 250 %, préférentiellement de 80 à 170 %.

De préférence, la quantité de non-solvant utilisé à la sous-étape b¹') correspond de 10 à 1000 % de la masse du matériau base PVC à purifier, de préférence de 50 à 600 %, préférentiellement de 80 à 300 %.

Pendant la sous-étape b¹'), le non-solvant du PVC peut être un mélange de non-solvants.

De préférence, le non-solvant consiste en de l'eau.

Pendant la sous-étape b^{1'}) du mode de réalisation MR1, le non-solvant ou le mélange de non-solvant du PVC peut en outre comprendre un co-solvant, tel que défini ci-dessus.

De préférence, la quantité de co-solvant éventuellement utilisé à la sous-étape b^{1'}) correspond de 0 à 30% de la masse du non solvant ou du mélange de non solvant utilisé dans la sous-étape b^{1'}), de préférence de 2% à 22%, préférentiellement de 4% à 20%.

Selon un mode de réalisation MR2, l'étape b) est une étape b²) comprenant l'ajout d'acide organique dilué dans un non-solvant du PVC, au matériau base PVC dissout obtenu à l'étape a).

De préférence, selon ce mode de réalisation, la quantité d'acide organique utilisé à l'étape b²) correspond de 10% à 400 % de la masse du matériau base PVC à purifier, de préférence de 40% à 250 %, préférentiellement de 80% à 170 %.

De préférence, la quantité de non-solvant utilisé à l'étape b²) correspond de 10% à 1000 % de la masse du matériau base PVC à purifier, de préférence de 35% à 600 %, préférentiellement de 50% à 300 %.

Pendant l'étape b²), le non-solvant du PVC peut être un mélange de non-solvants.

De préférence, le non-solvant consiste en de l'eau.

Pendant l'étape b²) du mode de réalisation MR2, le mélange d'acide organique et de non-solvant du PVC peut en outre comprendre un co-solvant, tel que défini ci-dessus.

De préférence, la quantité de co-solvant éventuellement utilisé à l'étape b²) correspond de 0% à 30% de la masse du non solvant ou du mélange de non solvant utilisé dans l'étape b²), de préférence de 2% à 22%, préférentiellement de 4% à 20%.

Selon un mode de réalisation MR3, l'étape b) comprend une sous-étape b³) d'ajout d'acide organique dilué dans un non-solvant du PVC au matériau base PVC dissout obtenu à l'étape a), suivie d'une sous-étape b³') d'ajout d'un non-solvant du PVC.

De préférence, la quantité d'acide organique utilisé à la sous-étape b³) correspond de 10% à 400 % de la masse du matériau base PVC à purifier, de préférence de 40% à 250 %, préférentiellement de 80% à 170 %.

De préférence, la quantité de non-solvant utilisé à la sous-étape b³) correspond de 10% à 1000 % de la masse du matériau base PVC à purifier, de préférence de 35% à 600 %, préférentiellement de 50% à 300 %.

De préférence, la quantité de non-solvant utilisé à la sous-étape b³') correspond de 10% à 1000 % de la masse du matériau base PVC à purifier, de préférence de 35% à 600 %, préférentiellement de 50% à 300 %.

Pendant la sous-étape b³) ou b³'), le non-solvant peut être un mélange de non-solvants.

Pendant la sous-étape b³'), le non-solvant peut être identique ou différent du non-solvant de la sous-étape b³).

De préférence, le non-solvant de la sous-étape b³) et/ou b³') consiste en de l'eau.

Pendant l'étape b³'), le non-solvant peut être en mélange avec un co-solvant, tel que défini ci-dessous.

De préférence, la quantité de co-solvant éventuellement utilisé à l'étape b³') correspond de 0 à 30% de la masse du non-solvant ou du mélange de non-solvant utilisé dans l'étape b³'), de préférence de 2 à 22%, préférentiellement de 4% à 20%.

De préférence, la quantité totale de co-solvants éventuellement utilisés à l'étape b³) et/ou b³') correspond de 0 à 30% de la masse totale de non-solvant(s) ou de mélange(s) de non-solvant(s) utilisé(s) dans l'étape b³) et/ou b³'), de préférence de 2% à 22%, préférentiellement de 4% à 20%.

Selon un mode de réalisation MR4, l'étape b) comprend une sous-étape b⁴) d'ajout d'un non-solvant du PVC au matériau base PVC dissout obtenu à l'étape a), suivie d'une sous-étape b⁴') d'ajout de l'acide organique.

De préférence, la quantité de non-solvant utilisé à l'étape b⁴) correspond de 10 à 1000 % de la masse du matériau base PVC à purifier, de préférence de 35 à 600 %, préférentiellement de 50 à 300 %.

De préférence, le non-solvant consiste en de l'eau.

De préférence, la quantité d'acide organique utilisé à l'étape b⁴') correspond de 10 à 400 % de la masse du matériau base PVC à purifier, de préférence de 40 à 250 %, préférentiellement de 80 à 170 %.

Pendant l'étape b^{4'}), l'acide organique peut être en mélange avec un co-solvant tel que défini ci-dessus.

De préférence, la quantité de solvant de dissolution de l'étape a) éventuellement utilisé à l'étape b^{4'}) correspond de 0% à 30% de la masse du non solvant ou du mélange de non solvant utilisé dans l'étape b⁴), de préférence de 2% à 22%, préférentiellement de 4% à 20%.

De préférence, pour les modes de réalisation MR1, MR2, MR3 et MR4 :
- le milieu réactionnel est agité pendant toute l'étape b), et/ou
- toutes les étapes de l'étape b) sont mises en œuvre à une température comprise entre 0 et 140 °C, de préférence entre 20 et 80 °C.

De préférence, le procédé comprend en outre une étape d'opération unitaire c) de séparation liquide/solide de la suspension obtenue à l'étape b) pour isoler le précipité. Cette étape est compatible avec tous les modes de réalisation MR1, MR2, MR3 et MR4.

L'étape c) peut être effectuée par toute technique connue de l'homme du métier, par exemple par filtration, centrifugation, etc...

Selon un mode de réalisation MR5, l'étape c) est suivie d'une étape d) de lavage du précipité de l'étape c) (aussi appelé « gâteau humide »).

Une étape de lavage est connue de l'homme du métier, et peut par exemple comprendre une filtration par pression forcée.

L'étape d) peut comprendre un ou plusieurs lavages successifs du précipité, de préférence de 1 à 8 lavages, préférentiellement de 1 à 5 lavages.

L'étape d) de lavage est donc effectuée avec un solvant de lavage. Le solvant de lavage comprend un acide organique tel que défini ci-dessus, de préférence celui utilisé pendant l'étape b), éventuellement un solvant de dissolution tel que défini ci-dessus, de préférence celui utilisé pendant l'étape a), et/ou éventuellement un non-solvant du PVC tel que défini ci-dessus, de préférence celui utilisé pendant l'étape b). Selon un mode de réalisation, le solvant de lavage comprend un mélange d'acide organique et de solvant de dissolution, de préférence avec un ratio massique acide/solvant allant de 1/3 à 10/1, de préférence de 1/1 à 8/1, de préférence de 2/1 à 5/1. Selon un autre mode de réalisation, le solvant de lavage comprend un mélange d'acide organique, de solvant de dissolution et de non-solvant du PVC, de préférence avec un ratio massique acide/solvant allant de 1/10 à 3/1, de préférence de 1/5 à 3/2, de préférence de 1/3 à 1/1, et avec un ratio massique acide/non-solvant allant de 1/3 à 5/1, de préférence de 1/2 à 4/1, de préférence de 1/1 à 3/1.Selon un autre mode de réalisation, le solvant de lavage comprend uniquement l'acide organique.

La quantité massique du solvant de lavage utilisé par lavage est de 0,2 à 10 fois, de préférence de 0,5 à 5 fois, la masse du matériau base PVC à purifier de l'étape a).

La composition du solvant de lavage peut être différente pour chaque lavage.

De préférence, au moins le dernier, voire les deux dernier(s) lavage(s) de l'étape d), ou tous les lavages sont mis en œuvre avec l'acide organique seul en tant que solvant de lavage.

En complément, selon ce mode de réalisation MR5, l'étape c) peut être précédée d'une étape b⁵) de concentration de la suspension obtenue à l'étape b), par évaporation d'une partie de la phase liquide de la suspension. Cette étape b⁵) peut être effectuée par toute technique connue de l'homme du métier, par exemple en réduisant la pression, (notamment de 100 à 800 mbars.abs) et/ou en augmentant la température (notamment de 30 à 150°C), de préférence sans apport d'eau que ce soit à l'état de vapeur ou non. Selon ce mode de réalisation, l'étape c) est donc mise en œuvre sur la suspension concentrée obtenue après cette étape b⁵).

Selon un mode de réalisation alternatif MR6, le procédé comprend une étape b⁶) de stripage de la suspension obtenue à l'étape b). Cette étape est de préférence mise en œuvre avant l'étape c) de séparation liquide/solide.

Au cours de l'étape b⁶), le strippage permet d'évaporer et d'extraire progressivement le solvant de dissolution, l'éventuel non-solvant ; notamment on injecte de la vapeur d'eau pour augmenter la température, notamment de 30 à 150°C. Ce strippage, peut être mis en œuvre sous pression réduite (notamment de 100 à 800 mbar.abs). Les conditions optimales peuvent être déterminées par l'homme du métier, notamment en fonction des composés à évaporer. La quantité de vapeur d'eau injectée est comprise entre 1 et 20%, de préférence de 2% à 17%, préférentiellement de 4% à 12% par rapport à la masse de solvant de dissolution ajouté à l'étape a). La température de la vapeur d'eau est comprise entre 100 et 170°C, de préférence de 100 à 160°C, préférentiellement de 100 à 145°C la vapeur d'eau sera alors sous pressions.

De préférence, le mode de réalisation MR5 est combiné avec n'importe lequel des modes de réalisation MR1, MR2, MR3 ou MR4, et le mode de réalisation MR6 est combiné avec n'importe lequel des modes de réalisation MR1 ou MR3

De préférence, pour n'importe quel mode de réalisation décrit ci-dessus, le procédé comprend en outre une étape a2) de séparation solide/liquide du mélange obtenu à l'étape a), avant la mise en œuvre de l'étape b). Cette étape permet de séparer les composés du matériau base PVC à purifier qui sont insolubles dans le solvant de dissolution et/ou les insolubles ne faisant pas partie de la formulation du matériau base PVC.

De préférence, pour n'importe quel mode de réalisation décrit ci-dessus, le procédé comprend en outre une étape e) de séchage du précipité obtenu à l'étape d). Cette étape permet de retirer les traces des produits utilisés pendant le procédé, notamment le solvant, l'acide organique et selon les modes de réalisations le ou les co-solvant(s) et le ou les non solvant(s).

Le précipité obtenu à l'étape d) ou e) comprend un matériau base PVC épuré.

De préférence, le matériau base PVC épuré comprend :
- une quantité en masse de plomb inférieure ou égale à 50% de la masse de plomb comprise dans le matériau base PVC à purifier, de préférence inférieure ou égale à 30%, de préférence inférieure ou égale à 20%, de préférence inférieure ou égale à 10%, et/ou
- une quantité en masse de plastifiant inférieure ou égale à 10% de la masse de plastifiant comprise dans le matériau base PVC à purifier, de préférence inférieure ou égale à 5%, de préférence inférieure ou égale à 2%, de préférence inférieure ou égale à 1%, et/ou
- une quantité en masse de plastifiant CMR inférieure ou égale à 10% de la masse de plastifiants CMR comprise dans le matériau base PVC à purifier, de préférence inférieure ou égale à 5%, de préférence inférieure ou égale à 2%, de préférence inférieure ou égale à 1%.

De préférence, le matériau base PVC épuré présente une granulométrie inférieure à 500µm, de préférence inférieur à 400µm, de préférence inférieure à 200µm.

Eventuellement, une étape de broyage peut être nécessaire suite au procédé de purification pour obtenir cette granulométrie, notamment pour obtenir une granulométrie inférieure à 100 µm voire inférieure à 60 µm.

L'invention va maintenant être décrite grâce aux exemples suivants, non limitatifs.

### EXEMPLES

Pour tous les exemples, le procédé de purification a été mis en œuvre selon différentes conditions mais suivant le protocole général suivant :
- on solubilise le matériau base PVC dans un solvant de dissolution à une concentration donnée,
- on provoque une précipitation par ajout d'un solvant de précipitation,
- on filtre la suspension obtenue, et on lave éventuellement le solide avec un ou plusieurs solvants de lavage,
- on sèche le solide précipité ou lavé.

Les matériaux base PVC utilisés dans les exemples présentent les teneurs suivantes en plomb et plastifiants :

**[Tableau 1]**

| | Plastifiants | | Plomb |
|---|---|---|---|
| | CMR | Total | |
| Matériau base PVC 1 | 16 160 | 53 7200 | 7620 |
| Matériau base PVC 2 | 101 200 | 220 000 | 9000 |
| Matériau base PVC 3 | 32 310 | 107 440 | 243 |

### Exemple 1 : Influence de la présence d'acide dans le solvant de précipitation

Un matériau base PVC 1 et un matériau base PVC 2 ayant une teneur élevée en plomb ont été traités selon le protocole défini ci-dessus, dans les conditions détaillées dans le Tableau 2 ci-dessous.

**[Tableau 2]**

| N° | Matériau base PVC | Solvant de dissoluti on | Conc. (poids_matéri au PVC/poids_s olvant de dissolution) | Précipitatio n¹ | Solvant(s) de lavage² | Teneur en plastifiants résiduels (ppm) | | Plomb résiduel (ppm) |
|---|---|---|---|---|---|---|---|---|
| | | | | | | CMR | Total | |
| 1-1* | 2 | MEK | 18.4/81.6 | MEK/Eau 85/15 | 1*5.5p/p de MEK/Eau 88/12 | 2200 (98% éliminés ) | 10000 (95% éliminés ) | 8000 (11% éliminés ) |
| 1-2 | 1 | MEK | 15/85 | MEK/AcOH/ Eau | 2*3p/p de MEK/AcOH/ Eau | 1460 (91% éliminés ) | 11780 (78% éliminés ) | 3192 (57% éliminés ) |

| | | | | | | | | |
|---|---|---|---|---|---|---|---|---|
| * : comparatif ¹ le solvant (si présent) est initialement introduit dans le réacteur, puis l'eau (si présente) et l'acide sont successivement ajoutés. Le ratio indiqué est celui obtenu une fois la précipitation réalisée ² les quantités sont exprimées en poids du solvant de lavage par rapport au poids de matériau base PVC introduit initialement | | | | | | | | |

Ces résultats montrent que l'utilisation d'acide est nécessaire pour extraire le plomb avec un taux d'extraction élevé (au moins 50%).

### Exemple 2 : Purification d'un matériau base PVC à teneur élevée en plastifiants

Un autre matériau base PVC 3 comprenant une teneur élevée en plastifiants, mais une teneur très faible en plomb a été traité selon le protocole défini ci-dessus, dans différentes conditions. Ce matériau base PVC est typique des matériaux base PVC plastifiés, par exemple ceux utilisés pour le revêtement de sols.

Les conditions spécifiques des différents essais ainsi que les analyses de la teneur en plastifiants et plomb dans le solide final sont rassemblés dans le Tableau 3 suivant :

**[Tableau 3]**

| N° | Solvant de dissolutio n | Conc. (poids_matéria u PVC/poids_sol vant de dissolution) | Précipitation¹ | Solvant(s) de lavage² | Teneur en plastifiants résiduels (ppm) | | Plomb résiduel (ppm) |
|---|---|---|---|---|---|---|---|
| | | | | | CMR | Total | |
| 2-1 | MeTHF | 20/80 | MeTHF/Eau/ AcOH 67/13/20 | 2*1.5p/p de MeTHF/AcO H 25/75 2*1p/p AcOH | 300 (99% éliminés) | 1510 (99% éliminés) | 95 (61% éliminés) |
| | | | MeTHF/AcO H 45/55 | | | | |
| 2-2 | | | | | 740 (98% éliminés) | 3080 (97% éliminés) | 199 (18% éliminés) |
| 2-3 | MeTHP | 12/88 | MeTHP/AcO H 65/35 | 2*1.5p/p de MeTHP/AcO H 25/75 2*1p/p AcOH | 1030 (97% éliminés) | 4550 (96% éliminés) | 143 (41% éliminés) |
| 2-4 | MeTHF | 20/80 | MeTHF/Eau/ Ac. Prop. 58/14/28 | 2*1.5p/p de MeTHF/Ac. Prop. 25/75 3*1p/p Ac. Prop. | 410 (99% éliminés) | 1480 (99% éliminés) | 76 (69% éliminés) |

| | | | | | | | |
|---|---|---|---|---|---|---|---|
| ¹ le solvant (si présent) est initialement introduit dans le réacteur, puis l'eau (si présente) et l'acide sont successivement ajoutés. Le ratio indiqué est celui obtenu une fois la précipitation réalisée ² les quantités sont exprimées en poids du solvant de lavage par rapport au poids de matériau base PVC introduit initialement | | | | | | | |

Ces résultats montrent que le procédé selon l'invention permet d'extraire au moins 97% ou plus de plastifiants, et notamment au moins 96% des plastifiants CMR. Une partie du plomb résiduel est également extraite, et la présence d'eau permet une meilleure élimination du plomb. A noter toutefois que cet indicateur n'est pas primordial pour ce type de matériau base PVC dans lesquels la teneur initiale en plomb est déjà faible (raison pour laquelle le pourcentage de plomb extrait peut parfois être assez faible).

## Revendications

1. Procédé de purification d'un matériau base PVC à purifier comprenant du PVC et au moins un plastifiant et/ou un métal lourd, comprenant les étapes suivantes :
a) Une étape de dissolution du matériau base PVC à purifier dans un solvant de dissolution, pour obtenir un mélange comprenant le matériau base PVC dissout dans le solvant de dissolution, et
b) Une étape de précipitation comprenant l'ajout au mélange obtenu à l'étape a) d'au moins un acide organique, pour obtenir une suspension comprenant un précipité comprenant un matériau base PVC épuré.

2. Procédé selon la revendication 1, dans lequel le solvant de dissolution comprend un solvant comprenant de 3 à 20 atomes de carbone, de préférence de 3 à 8 atomes de carbone, et au moins un atome d'oxygène, de préférence de 1 à 5 atomes d'oxygène ; de préférence comprend un solvant choisi parmi les solvants cycliques ou aliphatiques, de préférence cycliques, comprenant au moins une fonction éther, ester, cétone ou cétal ; préférentiellement comprend un solvant choisi parmi le tétrahydrofurane, le méthyl-tétrahydrofurane, les méthyltétrahydropyranes, la méthyléthylcétone, la méthylisobutylcétone, le 1,4-dioxane, le 1,3-dioxolane, la cyclopentanone, la cyclohexanone, le monoglyme, le diglyme, le N-butyl acétate, le diméthyl-phtalate, le méthyl propionate, les esters lévulinates en C1-C4 et leurs dérivés cétal comme les esters en C1-C4 de lévulinate de propanediol cétal, et les acétates d'alkyle en C1-C8 linéaires ou ramifiés ; avantageusement parmi le méthyl-tétrahydrofurane, le 1,3-dioxolane, la méthyléthylcétone, le 4-méthyltétrahydropyrane.

3. Procédé selon la revendication 1 ou 2, dans lequel la quantité massique de solvant de dissolution utilisé à l'étape a) correspond de 1 à 12 fois la masse du matériau base PVC à purifier, de préférence de 1 à 8 fois, préférentiellement de 2 à 6 fois.

4. Procédé selon l'une quelconque des revendications précédentes, dans lequel l'acide organique comprend au moins une fonction COOH et de 2 à 24 atomes de carbone incluant le(les) C de la(des) fonction(s) COOH, de préférence de 2 à 18 atomes de carbone, préférentiellement de 2 à 10 atomes de carbone, avantageusement de 2 à 4 atomes de carbone ; de préférence est choisi parmi les composés de formule R1-COOH, avec R1 étant choisi parmi un méthyle, un éthyle et un radical hydrocarboné linéaire ou ramifié, et saturé ou insaturé, en C3-C23, de préférence en C3-C17, préférentiellement en C3-C9 ou parmi les composés de formule HOOC-R2-COOH avec R2 choisi parmi un méthyle, un éthyle et un radical hydrocarboné linéaire ou ramifié, et saturé ou insaturé, en C2-C22, de préférence en C2-C16, préférentiellement en C2-C8, ; plus préférentiellement l'acide organique est choisi parmi l'acide acétique, l'acide propionique, l'acide lévulinique, et l'acide formique.

5. Procédé selon l'une quelconque des revendications précédentes, dans lequel la quantité d'acide organique utilisé à l'étape b) correspond de 20% à 1000% de la masse du matériau base PVC à purifier, de préférence de 50 à 700 %, préférentiellement de 80 à 500 %.

6. Procédé selon l'une quelconque des revendications précédentes, dans lequel l'acide organique de l'étape b) est pur, ou dilué dans un diluant, le diluant étant de préférence un solvant de dissolution, un non-solvant du PVC, ou leurs mélanges, de préférence à un taux de dilution allant de 10% à 99,9% massique, de préférence de 40% à 96%.

7. Procédé selon l'une quelconque des revendications précédentes, dans lequel l'étape b) comprend l'ajout d'un premier non-solvant du PVC et éventuellement l'ajout d'un co-solvant du PVC, le co-solvant étant de préférence un deuxième non-solvant du PVC différent du premier non-solvant du PVC ou un solvant de dissolution identique ou différent du solvant de dissolution de l'étape a), préférentiellement le co-solvant est identique au solvant de dissolution utilisé à l'étape a).

8. Procédé selon l'une quelconque des revendications précédentes, dans lequel l'étape b) comprend une sous-étape b¹) d'ajout de l'acide organique au matériau base PVC dissout obtenu à l'étape a), suivie d'une sous-étape b¹') d'ajout d'un non-solvant du PVC.

9. Procédé selon l'une quelconque des revendications 1 à 7, dans lequel l'étape b) est une étape b²) comprenant l'ajout d'acide organique dilué dans un non-solvant du PVC, au matériau base PVC dissout obtenu à l'étape a).

10. Procédé selon l'une quelconque des revendications 1 à 7, dans lequel l'étape b) comprend une sous-étape b³) d'ajout d'acide organique dilué dans un non-solvant du PVC au matériau base PVC dissout obtenu à l'étape a), suivie d'une sous-étape b³') d'ajout d'un non-solvant du PVC.

11. Procédé selon l'une quelconque des revendications 1 à 7, dans lequel l'étape b) comprend une sous-étape b⁴) d'ajout d'un non-solvant du PVC au matériau base PVC dissout obtenu à l'étape a), suivie d'une sous-étape b⁴') d'ajout de l'acide organique.

12. Procédé selon l'une quelconque des revendications 6 à 11, dans lequel le non-solvant du PVC comprend un solvant choisi parmi les alcools, de préférence en C1-C12, les alcanes, de préférence en C5-C12, l'eau, et l'un quelconque de leurs mélanges ; préférentiellement comprend un solvant choisi parmi l'isopropanol, l'heptane, l'eau et l'un quelconque de leurs mélanges ; avantageusement est l'eau.

13. Procédé selon l'une quelconque des revendications précédentes, comprenant en outre une étape c) de séparation liquide/solide de la suspension obtenue à l'étape b) pour isoler le précipité.

14. Procédé selon la revendication 13, dans lequel l'étape c) est suivie d'une étape d) de lavage du précipité de l'étape c), et éventuellement l'étape c) est précédée d'une étape b⁵) de concentration de la suspension obtenue à l'étape b), par évaporation d'une partie de la phase liquide de la suspension.

15. Procédé selon la revendication 13, comprenant une étape b⁶) de stripage de la suspension obtenue à l'étape b).

16. Procédé selon l'une quelconques des revendications précédentes, comprenant en outre une étape a2) de séparation solide/liquide du mélange obtenu à l'étape a), avant la mise en œuvre de l'étape b), pour séparer les composés du matériau base PVC à purifier qui sont insolubles dans le solvant de dissolution.

17. Procédé selon l'une quelconques des revendications précédentes, dans lequel le métal lourd est du plomb, et les plastifiants sont des esters phtalates, notamment les esters phtalates CMR, en particulier le butyl benzyl phtalate, le di-(2-ethylhexyl) phtalate, le diisobutyl phtalate et le di-n-butyl phtalate.

18. Procédé selon l'une quelconques des revendications précédentes, dans lequel le matériau base PVC épuré comprend :
- une quantité en masse de plomb inférieure ou égale à 50% de la masse de plomb comprise dans le matériau base PVC à purifier, de préférence inférieure ou égale à 30%, de préférence inférieure ou égale à 20%, de préférence inférieure ou égale à 10%, et/ou
- une quantité en masse de plastifiant inférieure ou égale à 10% de la masse de plastifiant comprise dans le matériau base PVC à purifier, de préférence inférieure ou égale à 5%, de préférence inférieure ou égale à 2%, de préférence inférieure ou égale à 1%, et/ou
- une quantité en masse de plastifiant CMR inférieure ou égale à 10% de la masse de plastifiants CMR comprise dans le matériau base PVC à purifier, de préférence inférieure ou égale à 5%, de préférence inférieure ou égale à 2%, de préférence inférieure ou égale à 1%.

## Revendications modifiées

### Revendications modifiées conformément à la règle 137(2) CBE.

1. Procédé de purification d'un matériau base PVC à purifier comprenant du PVC et au moins un plastifiant et/ou un métal lourd, comprenant les étapes suivantes :
a) Une étape de dissolution du matériau base PVC à purifier dans un solvant de dissolution, pour obtenir un mélange comprenant le matériau base PVC dissout dans le solvant de dissolution, et
b) Une étape de précipitation comprenant l'ajout au mélange obtenu à l'étape a) :
- d'au moins un acide organique, et
- si le matériau base PVC à purifier comprend au moins un métal lourd, l'ajout d'un non-solvant du PVC consistant en de l'eau, la quantité de non-solvant correspondant de 10 à 1000 % de la masse du matériau base PVC à purifier, pour obtenir une suspension comprenant un précipité comprenant un matériau base PVC épuré.

2. Procédé selon la revendication 1, dans lequel le solvant de dissolution comprend un solvant comprenant de 3 à 20 atomes de carbone, de préférence de 3 à 8 atomes de carbone, et au moins un atome d'oxygène, de préférence de 1 à 5 atomes d'oxygène ; de préférence comprend un solvant choisi parmi les solvants cycliques ou aliphatiques, de préférence cycliques, comprenant au moins une fonction éther, ester, cétone ou cétal ; préférentiellement comprend un solvant choisi parmi le tétrahydrofurane, le méthyl-tétrahydrofurane, les méthyltétrahydropyranes, la méthyléthylcétone, la méthylisobutylcétone, le 1,4-dioxane, le 1,3-dioxolane, la cyclopentanone, la cyclohexanone, le monoglyme, le diglyme, le N-butyl acétate, le diméthyl-phtalate, le méthyl propionate, les esters lévulinates en C1-C4 et leurs dérivés cétal comme les esters en C1-C4 de lévulinate de propanediol cétal, et les acétates d'alkyle en C1-C8 linéaires ou ramifiés ; avantageusement parmi le méthyl-tétrahydrofurane, le 1,3-dioxolane, la méthyléthylcétone, le 4-méthyltétrahydropyrane.

3. Procédé selon la revendication 1 ou 2, dans lequel la quantité massique de solvant de dissolution utilisé à l'étape a) correspond de 1 à 12 fois la masse du matériau base PVC à purifier, de préférence de 1 à 8 fois, préférentiellement de 2 à 6 fois.

4. Procédé selon l'une quelconque des revendications précédentes, dans lequel l'acide organique comprend au moins une fonction COOH et de 2 à 24 atomes de carbone incluant le(les) C de la(des) fonction(s) COOH, de préférence de 2 à 18 atomes de carbone, préférentiellement de 2 à 10 atomes de carbone, avantageusement de 2 à 4 atomes de carbone ; de préférence est choisi parmi les composés de formule R1-COOH, avec R1 étant choisi parmi un méthyle, un éthyle et un radical hydrocarboné linéaire ou ramifié, et saturé ou insaturé, en C3-C23, de préférence en C3-C17, préférentiellement en C3-C9 ou parmi les composés de formule HOOC-R2-COOH avec R2 choisi parmi un méthyle, un éthyle et un radical hydrocarboné linéaire ou ramifié, et saturé ou insaturé, en C2-C22, de préférence en C2-C16, préférentiellement en C2-C8, ; plus préférentiellement l'acide organique est choisi parmi l'acide acétique, l'acide propionique, l'acide lévulinique, et l'acide formique.

5. Procédé selon l'une quelconque des revendications précédentes, dans lequel la quantité d'acide organique utilisé à l'étape b) correspond de 20% à 1000% de la masse du matériau base PVC à purifier, de préférence de 50 à 700 %, préférentiellement de 80 à 500 %.

6. Procédé selon l'une quelconque des revendications précédentes, dans lequel l'acide organique de l'étape b) est pur, ou dilué dans un diluant, le diluant étant de préférence un solvant de dissolution, un non-solvant du PVC, ou leurs mélanges, de préférence à un taux de dilution allant de 10% à 99,9% massique, de préférence de 40% à 96%.

7. Procédé selon l'une quelconque des revendications précédentes, dans lequel le non-solvant du PVC est un premier non-solvant du PVC, et l'étape b) comprend l'ajout d'un co-solvant du PVC, le co-solvant étant de préférence un deuxième non-solvant du PVC différent du premier non-solvant du PVC ou un solvant de dissolution identique ou différent du solvant de dissolution de l'étape a), préférentiellement le co-solvant est identique au solvant de dissolution utilisé à l'étape a).

8. Procédé selon l'une quelconque des revendications précédentes, dans lequel l'étape b) comprend une sous-étape b¹) d'ajout de l'acide organique au matériau base PVC dissout obtenu à l'étape a), suivie d'une sous-étape b¹') d'ajout du non-solvant du PVC.

9. Procédé selon l'une quelconque des revendications 1 à 7, dans lequel l'étape b) est une étape b²) comprenant l'ajout d'acide organique dilué dans le non-solvant du PVC, au matériau base PVC dissout obtenu à l'étape a).

10. Procédé selon l'une quelconque des revendications 1 à 7, dans lequel l'étape b) comprend une sous-étape b³) d'ajout d'acide organique dilué dans le non-solvant du PVC au matériau base PVC dissout obtenu à l'étape a), suivie d'une sous-étape b³') d'ajout du non-solvant du PVC.

11. Procédé selon l'une quelconque des revendications 1 à 7, dans lequel l'étape b) comprend une sous-étape b⁴) d'ajout du non-solvant du PVC au matériau base PVC dissout obtenu à l'étape a), suivie d'une sous-étape b⁴') d'ajout de l'acide organique.

12. Procédé selon l'une quelconque des revendications précédentes, comprenant en outre une étape c) de séparation liquide/solide de la suspension obtenue à l'étape b) pour isoler le précipité.

13. Procédé selon la revendication 12, dans lequel l'étape c) est suivie d'une étape d) de lavage du précipité de l'étape c), et éventuellement l'étape c) est précédée d'une étape b⁵) de concentration de la suspension obtenue à l'étape b), par évaporation d'une partie de la phase liquide de la suspension.

14. Procédé selon la revendication 12, comprenant une étape b⁶) de stripage de la suspension obtenue à l'étape b).

15. Procédé selon l'une quelconques des revendications précédentes, comprenant en outre une étape a2) de séparation solide/liquide du mélange obtenu à l'étape a), avant la mise en œuvre de l'étape b), pour séparer les composés du matériau base PVC à purifier qui sont insolubles dans le solvant de dissolution.

16. Procédé selon l'une quelconques des revendications précédentes, dans lequel le métal lourd est du plomb, et les plastifiants sont des esters phtalates, notamment les esters phtalates CMR, en particulier le butyl benzyl phtalate, le di-(2-ethylhexyl) phtalate, le diisobutyl phtalate et le di-n-butyl phtalate.

17. Procédé selon l'une quelconques des revendications précédentes, dans lequel le matériau base PVC épuré comprend :
- une quantité en masse de plomb inférieure ou égale à 50% de la masse de plomb comprise dans le matériau base PVC à purifier, de préférence inférieure ou égale à 30%, de préférence inférieure ou égale à 20%, de préférence inférieure ou égale à 10%, et/ou
- une quantité en masse de plastifiant inférieure ou égale à 10% de la masse de plastifiant comprise dans le matériau base PVC à purifier, de préférence inférieure ou égale à 5%, de préférence inférieure ou égale à 2%, de préférence inférieure ou égale à 1%, et/ou
- une quantité en masse de plastifiant CMR inférieure ou égale à 10% de la masse de plastifiants CMR comprise dans le matériau base PVC à purifier, de préférence inférieure ou égale à 5%, de préférence inférieure ou égale à 2%, de préférence inférieure ou égale à 1%.
